(19) Europäisches Patentamt
European Patent Office
Office européen des brevets

(11) **EP 4 271 110 B1**

(12) **EUROPEAN PATENT SPECIFICATION**

(45) Date of publication and mention
of the grant of the patent:
**01.07.2026  Bulletin 2026/27**

(51) International Patent Classification (IPC):
*H04W 74/0808* (2024.01)     *H04W 16/14* (2009.01)
*H04W 48/16* (2009.01)

(21) Application number: 23179679.8

(52) Cooperative Patent Classification (CPC):
**H04W 74/0808;** H04W 16/14; H04W 48/16

(22) Date of filing: **28.01.2022**

(54) **METHODS AND DEVICES FOR LBT FAILURE REPORTING**

VERFAHREN UND VORRICHTUNGEN ZUR MELDUNG VON LBT-FEHLERN

PROCÉDÉS ET DISPOSITIFS DE SIGNALISATION D'ÉCHEC LBT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  09.02.2021  CN 202110182239

(43) Date of publication of application:
**01.11.2023  Bulletin 2023/44**

(62) Document number(s) of the earlier application(s) in
accordance with Art. 76 EPC:
**22752166.3 / 4 247 098**

(73) Proprietor: **Vivo Mobile Communication Co., Ltd.
Dongguan, Guangdong 523863 (CN)**

(72) Inventor: **Liu, Jinhua
Dongguan, Guangdong 523863 (CN)**

(74) Representative: **Murgitroyd & Company
165-169 Scotland Street
Glasgow G5 8PL (GB)**

(56) References cited:
**WO-A1-2017/196086     US-A1- 2018 124 749**

## Description

This application is a divisional application for European Application No. 22752166.3, filed on June 13, 2023 and entitled "CHANNEL MEASUREMENT METHOD AND APPARATUS, LBT FAILURE REPORTING METHOD AND APPARATUS, AND DEVICE".

## TECHNICAL FIELD

This application pertains to the field of communication technologies, and specifically relates to a channel measurement method and apparatus, an LBT failure reporting method and apparatus, and a device.

## BACKGROUND

Currently, for unlicensed access in a frame structure based channel access mechanism (Frame Based Equipment, FBE) mode, a plurality of user equipments (User Equipment, UE) in a system can share a same unlicensed channel without hindering each other's access (that is, can simultaneously access the same unlicensed channel for uplink data transmission).

However, in an existing channel measurement and reporting method (for example, a channel measurement and reporting method based on a received signal strength indicator (Received Signal Strength Indication, RSSI) or a measurement and reporting method based on a listen before talk (Listen Before Talk, LBT) failure), the unlicensed channel in the FBE mode is measured and reported, but a network side device cannot determine a channel environment of the unlicensed channel. As a result, an interference source cannot be located in a timely manner and a resource scheduling algorithm of a radio network cannot be adjusted in a timely manner, thereby affecting service quality of an ultra-reliable and low latency communication (Ultra-Reliable and Low Latency Communication, URLLC) service.

WO2017196086A1 discloses a communication method of a terminal, which includes receiving resource assignment information including information indicating at least two consecutive uplink subframes transmittable and receivable through an unlicensed band from a base station, determining whether at least one of the at least two consecutive uplink subframes is occupied, and transmitting an uplink data to the base station during the at least one uplink subframe if it is determined that the at least one uplink subframe is occupied.

US20180124749A1 discloses a method for allocating a resource in a cellular network using an unlicensed band, which includes generating at least one resource assignment signal including information indicating a plurality of consecutive uplink (UL) subframes communicable through the unlicensed band, transmitting the resource assignment signal to a user equipment (UE) through the unlicensed band during at least one downlink (DL) subframe, and receiving UL data from the UE during the consecutive UL subframes.

## SUMMARY

Embodiments of this application aim to provide a channel measurement method and apparatus, an LBT failure reporting method and apparatus, and a device, to resolve a problem that URLLC service quality is affected in an existing channel measurement and reporting method for unlicensed access in an FBE mode.

To resolve the foregoing technical problem, this application is implemented as follows:

According to a first aspect, an LBT failure reporting method is provided and is performed by UE, which is defined in claim 1.

According to a second aspect, an LBT failure reporting method is provided and is performed by a network side device, which is defined in claim 7.

According to a third aspect, UE is provided, which is defined in claim 13.

According to a fourth aspect, a network side device is provided, which is defined in claim 14.

According to a fifth aspect, a readable storage medium is provided, which is defined in claim 15.

Further advantageous embodiments of the present disclosure are indicated in the dependent claims.

It is to be understood that both the foregoing general description and the following detailed description are exemplary only, and are not restrictive of the present disclosure.

## BRIEF DESCRIPTION OF DRAWINGS

FIG. 1 is a schematic architectural diagram of a communication system according to an embodiment of the present invention;

FIG. 2 is a first flowchart of a channel measurement method according to an embodiment of the present invention;

FIG. 3 is a schematic diagram of a measurement window according to an embodiment of the present invention;

FIG. 4 is a second flowchart of a channel measurement method according to an embodiment of the present invention;

FIG. 5 is a first schematic diagram of a measurement child window according to an embodiment of the present invention;

FIG. 6 is a second schematic diagram of a measurement child window according to an embodiment of the present invention;

FIG. 7 is a first flowchart of an LBT failure reporting method according to an embodiment of the present invention;

FIG. 8 is a second flowchart of an LBT failure reporting method according to an embodiment of the present invention;

FIG. 9 is a first schematic structural diagram of a channel measurement apparatus according to an embodiment of the present invention;

FIG. 10 is a second schematic structural diagram of a channel measurement apparatus according to an embodiment of the present invention;

FIG. 11 is a first schematic structural diagram of an LBT failure reporting apparatus according to an embodiment of the present invention;

FIG. 12 is a second schematic structural diagram of an LBT failure reporting apparatus according to an embodiment of the present invention;

FIG. 13 is a schematic structural diagram of a communication device according to an embodiment of the present invention;

FIG. 14 is a schematic diagram of hardware of UE according to an embodiment of the present invention; and

FIG. 15 is a schematic diagram of hardware of a network side device according to an embodiment of the present invention.

## DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

An existing protocol is standardizing that a URLLC service is supported in new radio in unlicensed spectrum (New Radio in Unlicensed Spectrum, NR-U). Currently, it is assumed that an environment of an unlicensed frequency is controllable. In an existing network, to measure a channel occupation rate, UE measures an RSSI. Compared with a preset threshold, if the RSSI is greater than the threshold, it is determined that a channel is occupied. However, when FBE access is configured for the UE in the system, measurement of one UE for occupation of the channel by another UE in the system cannot reflect a probability that the channel is successfully obtained when data needs to be transmitted by the UE. If no new measurement method is defined, the network cannot determine a radio environment of the unlicensed frequency. As a result, an alarm cannot be issued in a timely to locate an interference source, and a resource scheduling algorithm of a wireless network cannot be adjusted in a timely, thus affecting URLLC service quality.

1. LBT in NR-U

When NR runs at an unlicensed frequency, before sending is performed by using a channel (channel, 20 MHz), a transmitter (UE or gNB) shall detect the channel according to an LBT program to determine whether the channel is available. Specifically, the transmitter measures a power received on the channel. If the received power is greater than a preset value (the preset value is used to determine whether the channel is occupied), the channel is determined to be occupied. On the contrary, the channel is determined to be not occupied, and may be used to perform NR signal transmission. At present, there are a plurality of types of LBT. For sending of a physical uplink shared channel (Physical Uplink Shared Channel, PUSCH) and a physical uplink control channel (Physical Uplink Control Channel, PDSCH), the gNB or the UE may use LBT of Category 4 to initiate a COT, and the gNB and the UE may share the COT for data transmission. When performing LBT of Category 4, the transmitter (UE or gNB) may determine different channel access priorities (channel access priority class, CAPC) according to different service types, to determine a backoff (backoff) window length of LBT, where maximum duration of COTs initiated according to different CAPC values is different. In addition, a COT initiated by a CAPC value k can only allow an LCH whose CAPC value is less than or equal to k to use this COT for data transmission.

2. FBE mode

In an existing protocol, clear channel assessment (Clear Channel Assessment, CCA) and data sending in the FBE mode are standardized. According to the FBE mode, a plurality of transceiver pairs may be configured with a transmission window COT of a same periodicity (fixed frame period (fixed frame period, FFP)). At a start of each window, each transmitter needs to perform a short time of CCA (not less than 9 us). If the channel is determined to be idle, the transmitter may perform transmission at a start of the COT. A transmission time can be longer than a length of the COT. After the transmission ends, a channel idle time before a next transmission window COT starts is not less than 5% of the COT period or not less than 100 us. When a plurality of pairs of transmitters and receivers are configured with a same transmission window on a same channel, and the plurality of transmitters successfully obtain CCA simultaneously, sending may be simultaneously performed.

An unlicensed channel access manner for FBE synchronization is configured on a plurality of UEs in a same system. A preconfigured uplink transmission grant is used, and each UE may use a sub-band of a same unlicensed channel (20 MHz). Channel availability detection (that is, LBT) is performed based on a synchronous FBE configuration. The plurality of UEs are configured to simultaneously access a channel for uplink data transmission, that is, transmission of any UE does not cause a channel access failure of another UE.

3. Existing RSSI-based channel measurement

The protocol defines a time configuration for RSST measurement. On a configured frequency (RSSI measurement timing configuration frequency (RSSI and Channel measurement timing configuration, rmtc-Frequency)), the UE determines a measurement time window according to the following formula, and the measurement time window is determined according to an offset in a measurement period (in subframes):

$$\text{SFN mod T=FLOOR ( rmtc-SubframeOffset/10);}$$

$$\text{subframe=rmtc-SubframeOffset mod 10;}$$

with

$$\text{T=rmtc-Periodicity/10.}$$

According to this method, the UE measures a plurality of consecutive subframes during each measurement period to determine a channel occupation rate. The measurement period is configurable 40, 80, 160, 320, or 640 ms. A measured length is a configurable length of 1, 12 or 14, 24 or 28, 36 or 42, 70 or 60 consecutive OFDM symbols. An offset rmtc-SubframeOffset within a period is counted in subframes.

According to the foregoing described method in which a plurality of UEs share a same unlicensed channel based on a synchronization FBE configuration, the plurality of UEs may share a same unlicensed channel without hindering each other's access. According to this method, an FBE of a small period may be configured to support a low-latency URLLC service. For an FBE configuration of a small period, several OFDM symbols are reserved for each FBE period as an idle period, and the idle period is greater than 5% of an FFP length or greater than 100 us. There are at least four idle symbols in each FFP length if a subcarrier spacing (Subcarrier Spacing, SCS) is 30 kHz and an FFP length is 1 ms.

According to an existing measurement method, there is only one measurement window in each measurement period. A start point of measurement is a subframe start, and a continuous measurement time length is one or several symbols. However, in a multi-UE short-FTP FBE access mode, the following problem may occur based on existing measurement according to different measurement configurations:

If the configured measurement window is long, an FBE COT exists in the measurement period, that is, channel occupation measured by UE is actually channel occupation pre-scheduled by the base station, and the channel occupation does not cause channel access of the UE to fail, making the measurement meaningless.. If the configured measurement window is short, measurement of an idle period of an FFP is facilitated, for example, the measurement window is configured as an idle symbol before a start of an FBE COT starts, only one idle period can be measured in a measurement period, and a quantity of measurement samples is small. In addition, if the idle symbol before the start of FBE COT is not at a start of a subframe, an existing measurement configuration (an offset in subframes) cannot be configured.

To resolve the foregoing technical problem, the embodiments of this application provide a channel measurement method. UE may obtain target configuration information, where the target configuration information is used to configure a measurement window, the measurement window includes M measurement child windows, each measurement child window is located within an idle period of an FFP of an unlicensed channel in an FBE, and M is a positive integer; and the M measurement child windows are measured according to the target configuration information. In this solution, each measurement child window is located within an idle period of an FFP of an unlicensed channel in an FBE. Therefore, the M measurement child windows are measured, that is, idle periods of M FFPs are measured. In this way, when channel measurement is performed, a channel occupation time (Channel Occupation Time, COT) of an FFP is not measured. As a result, channel access of the UE will not fail due to channel occupation by other UE in a system (for unlicensed access in an FBE mode, a plurality of UEs in the system can share a same unlicensed channel without hindering each other's access). Further, after performing measurement, the UE may report occupation measurement information of the unlicensed channel to a network side device, and the network side device may determine a channel environment of the unlicensed channel according to the occupation measurement information. In this way, an interference source can be located in a timely manner and a resource scheduling algorithm of a radio network can be adjusted in a timely manner without affecting URLLC service quality.

In the related technology, the network side device receives an LBT failure reported by the UE, and can only know that the LBT failure occurs, but does not know when the LBT failure occurs and which type of LBT failure occurs.

To resolve the foregoing technical problem, the embodiments of this application provide an LBT failure reporting method. UE may report information to a network side device in a case of determining that a LBT failure occurs, where the information is used to indicate that access of an unlicensed channel in an FBE fails. In this solution, because the information may indicate that access of the unlicensed channel in the FBE fails, after receiving the information, the network side device may determine a channel environment of the unlicensed channel according to the information. In this way, an interference source can be located in a timely manner and a resource scheduling algorithm of a radio network can be adjusted in a timely manner without affecting URLLC service quality.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6-th generation (6-th Generation, 6G) communication system.

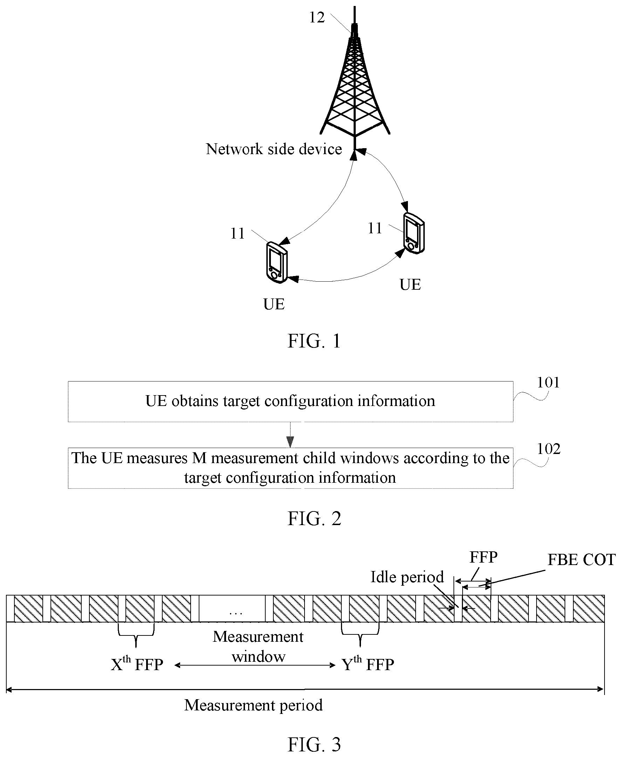

FIG. 1 is a block diagram of a wireless communication system to which embodiments of this application can be applied. The wireless communication system includes UE 11 and a network side device 12. The UE 11 may also be referred to as a terminal, a terminal device, or a user terminal. The UE 11 may be a user side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the UE 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a channel measurement method and apparatus, an LBT failure reporting method and apparatus, and a device provided in the embodiments of this application are described in detail by using specific embodiments and application scenes.

Based on the communication system shown in FIG. 1, an embodiment of this application provides a channel measurement method. As shown in FIG. 2, the channel measurement method may include the following steps 101 to 102.

Step 101: UE obtains target configuration information.

The target configuration information is used to configure a measurement window, the measurement window includes M measurement child windows, each measurement child window is located within an idle period of an FFP of an unlicensed channel in an FBE, and M is a positive integer.

It can be understood that, in this embodiment of this application, the target configuration information may be received by the UE from a network side device, or the target configuration information may be preconfigured by a network side device for the UE, or the target configuration information may be predefined (for example, specified in a protocol). This may be specifically determined according to an actual situation, and is not limited in this embodiment of this application.

It can be understood that a length of each measurement child window is less than or equal to a length of a corresponding (FFP) idle period, and each measurement child window may completely overlap with the corresponding idle period or occupy only a part of the corresponding idle period.

In this embodiment of this application, one FFP includes one idle period (Idle Period) and one COT.

As shown in FIG. 3, one measurement period in this embodiment of this application includes one measurement window, one measurement window includes M measurement child windows, and each measurement child window is one FFP idle period.

It should be noted that in this embodiment of this application, an example in which one measurement period includes one measurement window is used for description, but one measurement period may alternatively include a plurality of measurement windows (for descriptions of each measurement window in the plurality of measurement windows, refer to descriptions of the measurement window in this embodiment of this application, and details are not described herein again). This is not limited in this embodiment of this application.

Step 102: The UE measures the M measurement child windows according to the target configuration information.

It can be understood that in this embodiment of this application, the UE may measure only a channel in each child window in a measurement window, to reflect a channel environment of the unlicensed channel.

Optionally, the UE periodically measures the M measurement child windows according to the target configuration information.

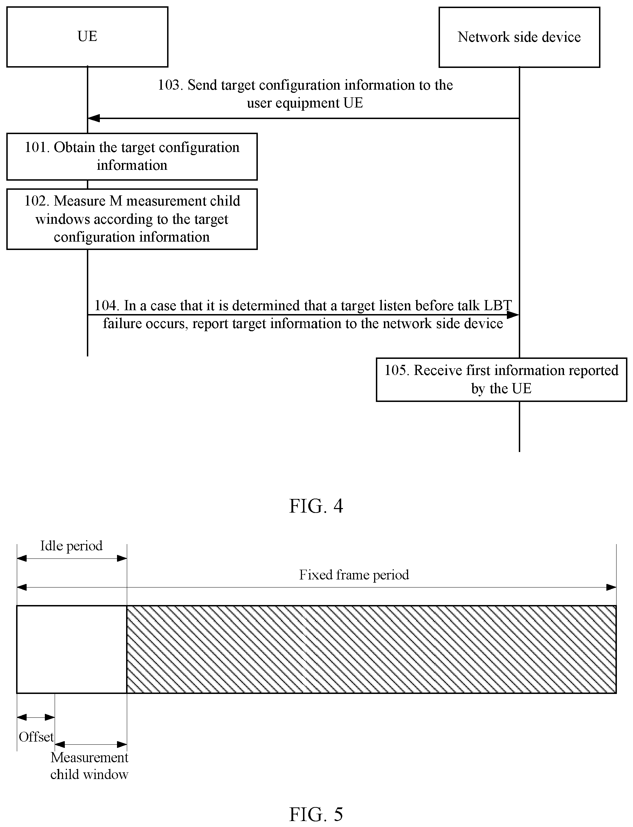

Optionally, as shown in FIG. 4, before step 101, the channel measurement method provided in this embodiment of this application may further include the following step 103.

Step 103: The network side device sends the target configuration information to the user equipment UE.

The configuration information is further used by the UE to measure the M measurement child windows according to the target configuration information.

In this embodiment of this application, UE may obtain target configuration information, where the target configuration information is used to configure a measurement window, the measurement window includes M measurement child windows, each measurement child window is located within an idle period of an FFP of an unlicensed channel in an FBE, and M is a positive integer; and the M measurement child windows are measured according to the target configuration information. In this solution, each measurement child window is located within an idle period of an FFP of an unlicensed channel in an FBE. Therefore, the M measurement child windows are measured, that is, idle periods of M FFPs are measured. In this way, when channel measurement is performed, a channel occupation time (Channel Occupation Time, COT) of an FFP is not measured. As a result, channel access of the UE will not fail due to channel occupation by other UE in a system (for unlicensed access in an FBE mode, a plurality of UEs in the system can share a same unlicensed channel without hindering each other's access). Further, after performing measurement, the UE may report occupation measurement information of the unlicensed channel to a network side device, and the network side device may determine a channel environment of the unlicensed channel according to the occupation measurement information. In this way, an interference source can be located in a timely manner and a resource scheduling algorithm of a radio network can be adjusted in a timely manner without affecting URLLC service quality.

It should be noted that in this embodiment of this application, that an unlicensed channel is occupied means that a measured unlicensed channel is occupied by a wireless device that does not belong to this communication system.

Optionally, the target configuration information is specifically used to configure at least one of the following:

an offset of a start position of each measurement child window relative to a start position of an idle period of a corresponding FFP;

an end position of each measurement child window is an end position of an idle period of a corresponding FFP; and

an interval between any two adjacent measurement child windows in the M measurement child windows is at least one FFP, where

X is a positive integer.

It can be understood that in this embodiment of this application, an offset of a start position of each measurement child window relative to a start position of an idle period of a corresponding FFP indicates that the start position of each measurement child window may be a start position of a corresponding idle period, or may be a position of an offset corresponding to a start position offset of a corresponding idle period. This may be specifically determined according to an actual situation, and is not limited in this embodiment of this application.

It can be understood that, in this embodiment of this application, an end position of each measurement child window may be an end position of an idle period of a corresponding FFP, or may not be an end position of an idle period of a corresponding FFP. This may be specifically determined according to an actual situation, and is not limited in this embodiment of this application.

In this embodiment of this application, for each idle period, a relative offset from a start of the idle period may be defined, and channel measurement may be performed in only a time period from the start of the offset to an end of the idle period. As shown in FIG. 5, there is an offset before a measurement child window. In this case, a potential LBT measurement window may be measured.

It can be understood that, in this embodiment of this application, measurement child windows in a measurement window may be consecutive (any two adjacent measurement child windows may be idle periods of two adjacent FFPs), or may be discontinuous (there is at least one FFP between any two adjacent measurement child windows, and quantities of FFPs between any two adjacent measurement child windows may be the same or may be different). In this way, diversity of measurement child window setting can be increased.

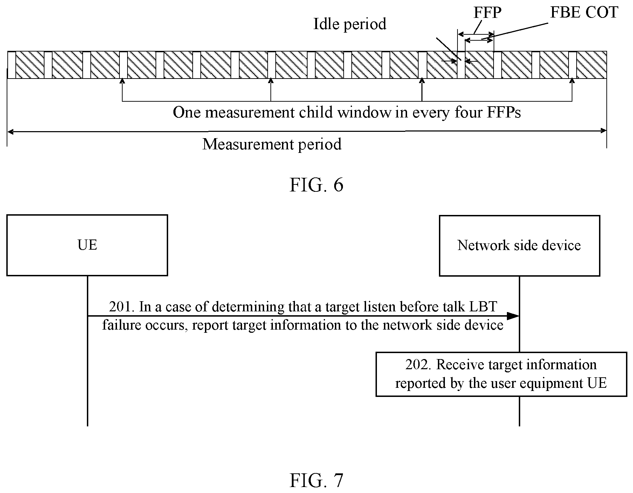

For example, a measurement window may be comb-like. That is, in a measurement period, there is at least one FFP between any two adjacent measurement child windows. In a measurement period, the UE measures idle periods of one or more FFPs at a time interval. As shown in FIG. 6, in a measurement period, the UE measures an idle period of one FFP at an interval of every three FFPs, that is, measures an idle period of one FFP in every four FFPs.

Optionally, the target configuration information is specifically used to configure any one of the following:

a start measurement FFP of the measurement window;
a start measurement FFP and an end measurement FFP of the measurement window;
a start measurement FFP of the measurement window and the measurement window with a window length of N FFPs;
start time point information of the measurement window; and
start time point information and end time point information of the measurement window, where
the start time point information includes at least one of the following: a start frame number, a start slot number, and a start symbol number; the end time point information includes at least one of the following: an end frame number, an end slot number, and an end symbol number; and N is a positive integer.

It can be understood that information configured in the foregoing target configuration information is used to determine the measurement window, and may be further used to determine other information of the measurement window. This may be specifically determined according to an actual situation, and is not limited in this embodiment of this application.

It can be understood that the start measurement FFP of the measurement window and the start time point information of the measurement window indicate a start position of the measurement window, and the end measurement FFP of the measurement window and the end time point information of the measurement window indicate an end position of the measurement window.

It can be understood that when the target configuration information is the start measurement FFP of the measurement window, if only a start FFP position is configured, and no end position or window length is configured, it indicates that measurement child windows in all FFP idle periods from the start measurement FFP to the end of the measurement period are to be measured.

It can be understood that, when the target configuration information is the start measurement FFP and the end measurement FFP of the measurement window, it indicates that measurement child windows all FFP idle periods from the start measurement FFP to the end measurement FFP are to be measured.

It can be understood that when the target configuration information is the start measurement FFP of the measurement window and the measurement window with a window length of N FFPs, it indicates that measurement child windows in idle periods of N FFPs from the start measurement FFP are to be measured.

It can be understood that when the target configuration information is the start time point information of the measurement window, if only a start time position is configured, and no end position or window length is configured, it indicates that measurement child windows in all FFP idle periods from the start position to the end of the measurement period are to be measured.

It can be understood that, when the target configuration information is the start time point information and the end time point information of the measurement window, it indicates that measurement child windows in all FFP idle periods from a time indicated by the start time point information to a time indicated by the end time point information are to be measured.

For example, measurement of the FBE may be configured by using a number of an FFP in a measurement period. For example, the UE may be configured to measure an idle period of an X-th FFP to an idle period of a Y-th FFP, or the UE may be configured to measure idle periods of N FFPs starting from an idle period of an X-th FFP. As shown in FIG. 3, during a measurement period, the UE needs to measure idle periods between the X-th FFP (the start position of the measurement window) and the Y-th FFP (the end position of the measurement window).

In this embodiment of this application, a plurality of options for determining configuration information of the measurement window are provided, so that the measurement window can be better set.

Optionally, in this embodiment of this application, the UE may report occupation measurement information of the unlicensed channel to the network side device based on measurement results of the M measurement child windows.

For example, as shown in FIG. 4, after step 102, the channel measurement method provided in this embodiment of this application may further include the following step 104 to step 105.

Step 104: The UE reports first information to the network side device.

The first information is used to indicate the occupation measurement information of the unlicensed channel.

Step 105: The network side device receives the first information reported by the UE.

It can be understood that, in this embodiment of this application, the UE receives a channel occupation measurement configuration and a reporting configuration (the target configuration information) that are based on FFP access, then performs channel occupation measurement affecting an FFP access success rate according to a measurement parameter (configured for the measurement configuration), and reports a channel occupation measurement result (the first information) affecting the FFP access success rate according to the reporting configuration. Correspondingly, the network side device sends the channel occupation measurement configuration and the reporting configuration (the target configuration information) that are based on FFP access to the UE, and then receives the channel occupation measurement result (the first information) affecting the FFP access success rate reported by the UE.

Optionally, in this embodiment of this application, the UE may report the occupation measurement information when obtaining the measurement result; the UE may report the occupation measurement information when the measurement result meets a predetermined condition, for example, the UE reports the occupation measurement information in a case of determining that the unlicensed channel is occupied (a base station may set a threshold of a channel occupation proportion of a measurement child window, and reporting is triggered when the threshold is reached or exceeded); the UE may periodically report the occupation measurement information; the UE may report the occupation measurement information when receiving a query message for channel occupation from the network side device; or the UE may report the occupation measurement information in another case. This is not limited in this embodiment of this application.

For example, the foregoing step 104 may be specifically implemented by the following step 104a.

Step 104a: The UE reports the first information to the network side device according to the target configuration information.

The target configuration information is further used to instruct to report the first information.

For example, the foregoing step 104a may be specifically implemented by the following step 104a1, or the foregoing step 104a may be specifically implemented by the following step 104a2.

Step 104a1: In a case where the target configuration information specifically instructs to periodically report the first information, the UE periodically reports the first information to the network side device.

It should be noted that, in this embodiment of this application, a periodic measurement period and a periodic reporting (the first information) period of the UE may be the same or different. This is not limited in this embodiment of this application.

Step 104a2: In a case where the target configuration information specifically instructs to report the first information when a first predetermined trigger condition is met, the UE reports the first information to the network side device when the first predetermined trigger condition is met.

For example, the first predetermined trigger condition may be: the UE determines, according to a measurement result (the occupation measurement information), that the unlicensed channel is occupied.

It can be understood that the target configuration information may be further used to configure another manner of reporting the first information. This is not limited in this embodiment of this application. Certainly, the target configuration information may be alternatively used to configure that the UE does not report the first information.

For example, before the foregoing step 104, the channel measurement method provided in this embodiment of this application may further include the following step 106. The foregoing step 104 may be specifically implemented by the following step 104b.

Step 106: The network side device sends a first query message to the UE.

Step 104b: When receiving the first query message from the network side device, the UE reports the first information to the network side device.

The first query message is used to query the occupation measurement information of the unlicensed channel.

In this embodiment of this application, a plurality of manners of reporting the occupation measurement information by the UE are provided, so that the manner of reporting the occupation measurement information can be determined according to an actual requirement.

Optionally, in this embodiment of this application, the UE may determine whether the unlicensed channel is occupied, or the network side device may determine whether the unlicensed channel is occupied. This is not limited in this embodiment of this application.

Optionally, the first information includes any one of the following: M first receive powers, one second receive power, an occupation proportion, the unlicensed channel being not occupied, and the unlicensed channel being occupied.

Each first receive power includes any one of the following: an average value of at least one receive power corresponding to one measurement child window and a maximum value of at least one receive power corresponding to one measurement child window.

The second receive power includes any one of the following: an average value of all receive powers corresponding to the M measurement child windows, and a maximum value of all the receive powers corresponding to the M measurement child windows.

The occupation proportion is a proportion of occupied measurement child windows in the M measurement child windows.

It can be understood that, an example in which measurement is performed on one measurement child window is used for description. At least one receive power may be obtained through measurement on one measurement child window, and one first receive power may be an average value of the at least one receive power, or may be a maximum value of the at least one receive power.

It can be understood that in this embodiment of this application, the second receive power may be an average value of the M first receive powers (that is, may be an average value of M average values (one average value is an average value of at least one receive power corresponding to one measurement child window) or an average value of M maximum values (one maximum value is a maximum value of at least one receive power corresponding to one measurement child window), or may be a maximum value of M receive powers (that is, may be a maximum value of M average values or a maximum value of M maximum values), or may be another value. This is not limited in this embodiment of this application.

For example, in this embodiment of this application, the receive power may be an RSSI, or may be another value. This is not limited in this embodiment of this application.

In this embodiment of this application, a highest receive power (for example, an RSSI) may still cause an LBT failure of the UE in striving for an FBE COT. Therefore, it is still meaningful to measure the highest receive power.

The first information may be other information. This may be specifically determined according to an actual situation, and is not limited in this embodiment of this application.

For example, the first information may be X first receive powers (X is a positive integer less than or equal to M). Optionally, the X first receive powers may be any X first receive powers in the M first receive powers, or the X first receive powers may be X first receive powers that meet a specified condition in the M first receive powers, for example, X highest first receive powers in the M first receive powers.

Optionally, in a case where the first information includes the unlicensed channel being not occupied or the unlicensed channel being occupied, before step 104, the channel measurement method provided in this embodiment of this application may further include the following step 106.

Step 106: The UE determines, based on second information, whether the unlicensed channel is occupied.

The second information includes any one of the following: the M first receive powers, the one second receive power, and the occupation proportion.

Optionally, when the second information is the M first receive powers, the UE may first determine the occupation proportion according to the second information, and then determine, according to the occupation proportion, whether the unlicensed channel is occupied. The UE may alternatively determine, according to another method, whether the unlicensed channel is occupied. This is not limited in this embodiment of this application.

For example, whether one measurement child window is occupied is used as an example for description. The UE may compare a first receive power corresponding to the one measurement child window with a first threshold (the first threshold may be configured by the network side device or may be predefined). If the first receive power is greater than or equal to the first threshold, the one measurement child window is occupied; otherwise, the one measurement child window is not occupied. Then the UE may count a proportion of occupied measurement child windows in the M measurement child windows, that is, an occupation proportion, and then compare the occupation proportion with a second threshold (the second threshold may be configured by the network side device or may be predefined). If the occupation proportion is greater than or equal to the second threshold, the unlicensed channel is occupied; otherwise, the unlicensed channel is not occupied.

Optionally, when the second information is the second receive power, the UE may compare the second receive power with a third threshold (the third threshold may be configured by the network side device or may be predefined). If the second receive power is greater than or equal to the third threshold, the unlicensed channel is occupied; otherwise, the unlicensed channel is not occupied.

Optionally, in a case where the first information includes the occupation proportion, before step 104, the channel measurement method provided in this embodiment of this application may further include the following step 107.

Step 107: The UE determines the occupation proportion based on third information.

The third information includes the M first receive powers.

It can be understood that for descriptions of determining the occupation proportion by the UE based on the third information, refer to the foregoing related descriptions. Details are not described herein again.

Optionally, in a case where the first information includes the second information, after step 105, the channel measurement method provided in this embodiment of this application may further include the following step 108.

Step 108: The network side device determines, based on the second information, whether the unlicensed channel is occupied.

It can be understood that for descriptions of determining, by the network side device based on the second information, whether the unlicensed channel is occupied, refer to the foregoing related descriptions of determining, by the UE based on the second information, whether the unlicensed channel is occupied. Details are not described herein again.

In this embodiment of this application, a plurality of types of first information are provided, so that a type of the first information can be determined according to an actual situation.

Based on the communication system shown in FIG. 1, an embodiment of this application provides an LBT failure reporting method. As shown in FIG. 7, the LBT failure reporting method may include the following steps 201 to 202.

Step 201: In a case of determining that a LBT failure occurs, UE reports information to a network side device.

The information is used to indicate that access of an unlicensed channel in an FBE fails.

Step 202: The network side device receives the information reported by the user equipment UE.

The information is reported in a case where the UE determines that the LBT failure occurs, and the information is used to indicate that access of the unlicensed channel of in the FBE fails.

Optionally, the information may be used to indicate a position at which an LBT failure occurs, that is, a position at which access of the unlicensed channel in the FBE fails.

In this embodiment of this application, the network side device may quickly learn, according to the information, a type of an LBT failure that occurs, so that a network problem can be quickly located or diagnosed, and then resource adjustment is correspondingly performed.

In this embodiment of this application, UE may report information to a network side device in a case of determining that a LBT failure occurs, where the information is used to indicate that access of an unlicensed channel in an FBE fails. In this solution, because the information may indicate that access of the unlicensed channel in the FBE fails, after receiving the information, the network side device may determine a channel environment of the unlicensed channel according to the information. In this way, an interference source can be located in a timely manner and a resource scheduling algorithm of a radio network can be adjusted in a timely manner without affecting URLLC service quality.

Optionally, in a case where the LBT failure is an LBT failure that occurs on sending of a target PUSCH used to carry logical channel data or a target PUCCH used to carry uplink control information related to logical channel data, the information includes time point information of occurring the LBT failure. The time point information includes at least one of the following: a system frame number (System Frame Number, SFN), a slot number, a symbol number, or a number of an FFP.

Optionally, the target PUSCH includes any one of the following: a PUSCH used to carry ultra-reliable and low latency communication URLLC service data, and a PUSCH whose physical layer priority meets a first predetermined condition.

Optionally, the first predetermined condition may be that a physical layer priority of a PUSCH is high, that is, the target PUSCH is a high-priority PUSCH.

The first predetermined condition may alternatively be that a physical layer priority of a PUSCH is low, and the first predetermined condition may alternatively be that a physical layer priority of a PUSCH is another. This is not limited in this embodiment of this application.

Optionally, the target PUCCH includes any one of the following: a PUCCH used to carry a hybrid automatic repeat request HARQ feedback, a PUCCH used to carry channel state information CSI, a PUCCH used to carry a target scheduling request SR, and a PUCCH whose physical layer priority meets a second predetermined condition.

Optionally, the target SR is an SR triggered by a data logical channel of a preconfigured service.

For example, the preconfigured service may be a URLLC service.

Optionally, the second predetermined condition may be that a physical layer priority of a PUCCH is a high priority PUCCH, that is, the target PUCCH is a high-priority PUCCH.

The second predetermined condition may alternatively be that a physical layer priority of a PUCCH is low, and the second predetermined condition may alternatively be that a physical layer priority of a PUCCH is another. This is not limited in this embodiment of this application.

In a case where the LBT failure is an LBT failure corresponding to a preconfigured uplink transmission grant configured or activated by the network side device for the UE, the information includes at least one of the following: a number configured for a preconfigured uplink transmission grant (Configured Grant, CG), and a number of the preconfigured uplink transmission grant.

Optionally, the network side device may configure the UE to perform reporting to the network side device when an LBT failure occurs, or he network side device may configure the UE to periodically report an LBT failure. That is, the UE may report, in a centralized manner, LBT failures occurring in a period. The network side device may alternatively configure the UE to perform reporting to the network side device when receiving a query message about an access failure of the unlicensed channel in the FBE, or may perform reporting in another case. This is not limited in this embodiment of this application.

For example, the foregoing step 201 may be specifically implemented by the following step 201a.

Step 201a: The UE reports the information to the network side device according to first configuration information.

The first configuration information is used to instruct to report the information.

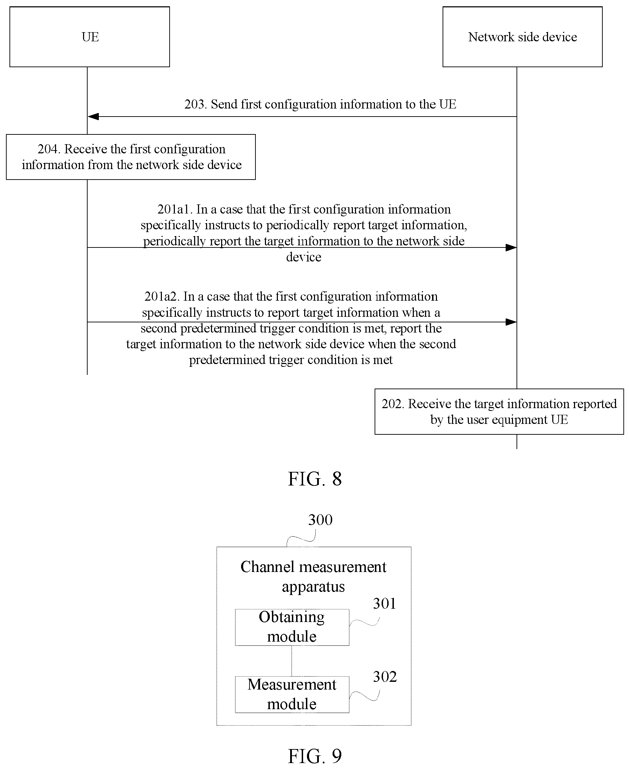

Optionally, as shown in FIG. 8, before the foregoing step 201a, the LBT failure reporting method provided in this embodiment of this application may further include the following step 203 to step 204. The foregoing step 201a may be specifically implemented by the following step 201a1 or 201a2.

Step 203: The network side device sends the first configuration information to the UE.

The first configuration information is used to instruct whether to report the information (that is, the LBT failure). Specifically, the first configuration information is used to instruct whether to report the information in a case where the LBT failure occurs.

Optionally, the first configuration information may be used to instruct to report the information, or may be used to instruct not to report the information. The first configuration information may be further used to indicate a manner of reporting the information. This may be specifically determined according to an actual use requirement, and is not limited in this embodiment of this application.

Step 204: The UE receives the first configuration information from the network side device.

It should be noted that, in this embodiment of this application, a time at which the network side device sends the first configuration information to the UE is not limited. For example, when the target PUSCH or the target PUCCH of the logical channel data is configured, whether the UE reports the LBT failure corresponding to sending of the target PUSCH or the target PUCCH of the logical channel data may be configured (by sending the first configuration information to the UE), or whether the UE reports the LBT failure corresponding to sending of the target PUSCH or the target PUCCH of the logical channel data may be configured at another time; when the preconfigured uplink transmission grant of the UE is configured or activated, whether the UE reports the LBT failure corresponding to the preconfigured uplink transmission grant may be configured (by sending the first configuration information to the UE), or whether the UE reports the LBT failure corresponding to the preconfigured uplink transmission grant may be configured at another time.

Step 201a1: In a case where the first configuration information specifically instructs to periodically report the information, the UE periodically reports the information to the network side device.

It should be noted that in this embodiment of this application, a periodic measurement period and a periodic reporting (information) period of the UE may be the same or different. This is not limited in this embodiment of this application.

Step 201a2: In a case where the first configuration information specifically instructs to report the information when a second predetermined trigger condition is met, the UE reports the information to the network side device when the second predetermined trigger condition is met.

Optionally, in this embodiment of this application, the second predetermined trigger condition may be: the UE determines that the LBT failure occurs, and the second predetermined trigger condition may be another condition. This is not limited in this embodiment of this application.

It can be understood that the UE receives a report configuration (the first configuration information) based on an FFP access channel LBT failure, then counts information affecting the FFP access channel LBT failure by using a measurement parameter, and finally reports the information (the information) affecting the FFP access channel LBT failure by using a reported configuration parameter. Correspondingly, the network side device sends the report configuration (the first configuration information) based on the FFP access channel LBT failure, and then receives the information (the information) affecting the FFP access channel LBT failure reported by the UE.

For example, when an LBT failure occurs on a PUSCH that carries URLLC data, the UE may report time point information of occurring the LBT failure, where the time point information may be at least one of the following: an SFN number, a slot number, and a symbol number.

For example, when an LBT failure occurs on a PUCCH to which an SR triggered by a related logical channel that is used to carry URLLC service data, the UE may report time point information of occurring the LBT failure, where the time point information may be at least one of the following: an SFN number, a slot number, and a symbol number.

For example, when configuring a PUCCH resource of the UE, the base station may configure whether the UE reports an LBT failure of the PUCCH. The PUCCH is used to carry a HARQ feedback, CSI, or an SR.

For example, when configuring or activating the preconfigured uplink transmission grant of the UE, the base station may configure whether the UE reports the LBT failure corresponding to the preconfigured uplink transmission grant. Reporting information may include at least one of the following: a number configured by the CG, and a number of the CG.

For example, the base station may configure, according to a logical channel, whether the UE should trigger LBT failure reporting. When a logical channel is configured with logical channel failure reporting, if an LBT failure occurs on sending of the PUSCH that carries the logical channel data the UE should report logical channel failure information to the serving base station.

For example, the base station may configure, according to a physical layer priority of a PUCCH or a PUSCH, whether the UE performs LBT failure reporting. For example, the base station may configure the UE to perform LBT failure reporting on a high-priority PUCCH or PUSCH. When an LBT failure occurs on the high-priority PUCCH/PUSCH, LBT failure reporting is triggered.

For example, before the foregoing step 201, the LBT failure reporting method provided in this embodiment of this application may further include the following step 205. The foregoing step 201 may be specifically implemented by the following step 201b.

Step 205: The network side device sends a second query message to the UE.

Step 201b: When receiving the second query message from the network side device, the UE reports the information to the network side device.

The second query message is used to query whether access of the unlicensed channel in the FBE fails.

In this embodiment of this application, a plurality of manners of reporting the information by the UE are provided, so that a manner of reporting the information can be determined according to an actual requirement.

It should be noted that the channel measurement method provided in the embodiments of this application may be performed by a channel measurement apparatus, or a control module that is in the channel measurement apparatus and that is configured to perform the channel measurement method. In the embodiments of this application, that the channel measurement apparatus performs the channel measurement method is used as an example to describe the channel measurement apparatus provided in the embodiments of this application.

FIG. 9 is a possible schematic structural diagram of a channel measurement apparatus according to an embodiment of this application. As shown in FIG. 9, a channel measurement apparatus 300 may include an obtaining module 301 and a measurement module 302, where the obtaining module 301 is configured to: obtain target configuration information, where the target configuration information is used to configure a measurement window, the measurement window includes M measurement child windows, each measurement child window is located within an idle period of a fixed frame period FFP of an unlicensed channel in a frame structure based channel access mechanism FBE, and M is a positive integer; and the measurement module 302 is configured to measure the M measurement child windows according to the target configuration information obtained by the obtaining module 301.

Optionally, the target configuration information is specifically used to configure at least one of the following: an offset of a start position of each measurement child window relative to a start position of an idle period of a corresponding FFP; an end position of each measurement child window is an end position of an idle period of a corresponding FFP; and an interval between any two adjacent measurement child windows in the M measurement child windows is at least one FFP.

Optionally, the target configuration information is specifically used to configure any one of the following: a start measurement FFP of the measurement window; a start measurement FFP and an end measurement FFP of the measurement window; a start measurement FFP of the measurement window and the measurement window with a window length of N FFPs; start time point information of the measurement window; and start time point information and end time point information of the measurement window, where the start time point information includes at least one of the following: a start frame number, a start slot number, and a start symbol number; the end time point information includes at least one of the following: an end frame number, an end slot number, and an end symbol number; and N is a positive integer.

Optionally, the channel measurement apparatus further includes a reporting module, where the reporting module is configured to: after the measurement module measures the M measurement child windows according to the target configuration information, report first information to a network side device, where the first information is used to indicate occupation measurement information of the unlicensed channel.

Optionally, the first information includes any one of the following: M first receive powers, one second receive power, an occupation proportion, the unlicensed channel being not occupied, and the unlicensed channel being occupied, where each first receive power includes any one of the following: an average value of at least one receive power corresponding to one measurement child window and a maximum value of at least one receive power corresponding to one measurement child window; the second receive power includes any one of the following: an average value of all receive powers corresponding to the M measurement child windows, and a maximum value of all the receive powers corresponding to the M measurement child windows; and the occupation proportion is a proportion of occupied measurement child windows in the M measurement child windows.

Optionally, the channel measurement apparatus 300 further includes a determining module, where the determining module is configured to: in a case where the first information includes the unlicensed channel being not occupied or the unlicensed channel being occupied, before the reporting module reports the first information to the network side device, determine, based on second information, whether the unlicensed channel is occupied; or the determining module is configured to: in a case where the first information includes the occupation proportion, before the reporting module reports the first information to the network side device, determine the occupation proportion based on third information, where the second information includes any one of the following: the M first receive powers, the one second receive power, and the occupation proportion; and the third information includes the M first receive powers.

Optionally, the reporting module is specifically configured to: report the first information to the network side device according to the target configuration information, where the target configuration information is further used to instruct to report the first information; or when a first query message from the network side device is received, report the first information to the network side device, where the first query message is used to query the occupation measurement information of the unlicensed channel.

Optionally, the reporting module is specifically configured to: in a case where the target configuration information specifically instructs to periodically report the first information, periodically report the first information to the network side device; or in a case where the target configuration information specifically instructs to report the first information when a first predetermined trigger condition is met, report the first information to the network side device when the first predetermined trigger condition is met.

In this embodiment of this application, UE may obtain target configuration information, where the target configuration information is used to configure a measurement window, the measurement window includes M measurement child windows, each measurement child window is located within an idle period of an FFP of an unlicensed channel in an FBE, and M is a positive integer; and the M measurement child windows are measured according to the target configuration information. In this solution, each measurement child window is located within an idle period of an FFP of an unlicensed channel in an FBE. Therefore, the M measurement child windows are measured, that is, idle periods of M FFPs are measured. In this way, when channel measurement is performed, a channel occupation time (Channel Occupation Time, COT) of an FFP is not measured. As a result, channel access of the UE will not fail due to channel occupation by other UE in a system (for unlicensed access in an FBE mode, a plurality of UEs in the system can share a same unlicensed channel without hindering each other's access). Further, after performing measurement, the UE may report occupation measurement information of the unlicensed channel to a network side device, and the network side device may determine a channel environment of the unlicensed channel according to the occupation measurement information. In this way, an interference source can be located in a timely manner and a resource scheduling algorithm of a radio network can be adjusted in a timely manner without affecting URLLC service quality.

The channel measurement apparatus in this embodiment of this application may be an apparatus, or may be a component, an integrated circuit, or a chip in a terminal. The apparatus may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The channel measurement apparatus in this embodiment of this application may be an apparatus with an operating system. The operating system may be an Android (Android) operating system, an iOS operating system, or another possible operating system. This is not specifically limited in this embodiment of this application.

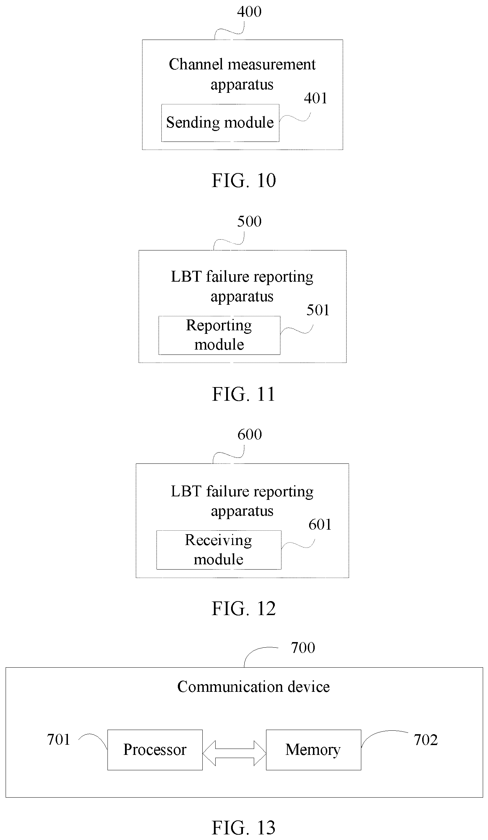

FIG. 10 is a possible schematic structural diagram of a channel measurement apparatus according to an embodiment of this application. As shown in FIG. 10, the channel measurement apparatus 400 includes a sending module 401, where the sending module 401 is configured to send target configuration information to user equipment UE, where the target configuration information is used to configure a measurement window, the measurement window includes M measurement child windows, each measurement child window is located within an idle period of a fixed frame period FFP of an unlicensed channel in a frame structure based channel access mechanism FBE, the configuration information is further used by the UE to measure the M measurement child windows according to the target configuration information, and M is a positive integer.

Optionally, the target configuration information is specifically used to configure at least one of the following: an offset of a start position of each measurement child window relative to a start position of an idle period of a corresponding FFP; an end position of each measurement child window is an end position of an idle period of a corresponding FFP; and an interval between any two adjacent measurement child windows in the M measurement child windows is at least one FFP.

Optionally, the target configuration information is specifically used to configure any one of the following: a start measurement FFP of the measurement window; a start measurement FFP and an end measurement FFP of the measurement window; a start measurement FFP of the measurement window and the measurement window with a window length of N FFPs; start time point information of the measurement window; and start time point information and end time point information of the measurement window, where the start time point information includes at least one of the following: a start frame number, a start slot number, and a start symbol number; the end time point information includes at least one of the following: an end frame number, an end slot number, and an end symbol number; and N is a positive integer.

Optionally, the channel measurement apparatus further includes a receiving module, where the receiving module is configured to: after the sending module 401 sends the target configuration information to the user equipment UE, receive first information reported by the UE, where the first information is used to indicate occupation measurement information of the unlicensed channel.

Optionally, the first information includes any one of the following: M first receive powers, one second receive power, an occupation proportion, the unlicensed channel being not occupied, and the unlicensed channel being occupied, where each first receive power includes any one of the following: an average value of at least one receive power corresponding to one measurement child window and a maximum value of at least one receive power corresponding to one measurement child window; the second receive power includes any one of the following: an average value of all receive powers corresponding to the M measurement child windows, and a maximum value of all the receive powers corresponding to the M measurement child windows; and the occupation proportion is a proportion of occupied measurement child windows in the M measurement child windows.

Optionally, the channel measurement apparatus further includes a determining module, where the determining module is configured to: in a case where the first information includes second information, after the receiving module receives the first information reported by the UE, determine, based on the second information, whether the unlicensed channel is occupied, where the second information includes any one of the following: the M first receive powers, the one second receive power, and the occupation proportion.

Optionally, the sending module is further configured to: before the receiving module receives the first information reported by the UE, send a first query message to the UE, where the first query message is used to query the occupation measurement information of the unlicensed channel.

Optionally, the target configuration information is further used to instruct the UE to periodically report the first information or report the first information when a first predetermined trigger condition is met.

The channel measurement apparatus provided in this embodiment of this application can implement the processes implemented in the method embodiments in FIG. 1 to FIG. 6, and achieve a same technical effect. To avoid repetition, details are not described herein again.

It should be noted that the LBT failure reporting method provided in the embodiments of this application may be performed by an LBT failure reporting apparatus, or a control module that is in the LBT failure reporting apparatus and that is configured to perform the LBT failure reporting method. In the embodiments of this application, that the LBT failure reporting apparatus performs the LBT failure reporting method is used as an example to describe the LBT failure reporting apparatus provided in the embodiments of this application.

FIG. 11 is a possible schematic structural diagram of an LBT failure reporting apparatus according to an embodiment of this application. As shown in FIG. 11, the LBT failure reporting apparatus 500 may include a reporting module 501, where the reporting module 501 is configured to: in a case of determining that a listen before talk LBT failure occurs, report information to a network side device, where the information is used to indicate that access of an unlicensed channel in a frame structure based channel access mechanism FBE fails.

Optionally, in a case where the LBT failure is an LBT failure that occurs on sending of a target PUSCH used to carry logical channel data or a target PUCCH used to carry uplink control information related to logical channel data, the information includes time point information of occurring the LBT failure; in a case where the LBT failure is an LBT failure corresponding to a preconfigured uplink transmission grant configured or activated by the network side device for the UE, the information includes at least one of the following: a number configured for a preconfigured uplink transmission grant, and a number of the preconfigured uplink transmission grant; and the time point information includes at least one of the following: a system frame number SFN, a slot number, a symbol number, and a number of an FFP.

Optionally, the target PUSCH includes any one of the following: a PUSCH used to carry ultra-reliable and low latency communication URLLC service data, and a PUSCH whose physical layer priority meets a first predetermined condition; and the target PUCCH includes any one of the following: a PUCCH used to carry a hybrid automatic repeat request HARQ feedback, a PUCCH used to carry channel state information CSI, a PUCCH used to carry a target scheduling request SR, and a PUCCH whose physical layer priority meets a second predetermined condition.

Optionally, the target SR is an SR triggered by a data logical channel of a preconfigured service.

Optionally, the reporting module is specifically configured to: report the information to the network side device according to first configuration information, where the first configuration information is used to instruct to report the information; or when a second query message is received from the network side device, report the information to the network side device, where the second query message is used to query whether access of the unlicensed channel in the FBE fails.

Optionally, the LBT failure reporting apparatus further includes a receiving module, where the receiving module is configured to: before the reporting module reports the information to the network side device according to first configuration information, receive the first configuration information from the network side device; and the reporting module is specifically configured to: in a case where the first configuration information specifically instructs to periodically report the information, periodically report the information to the network side device; or in a case where the first configuration information specifically instructs to report the information when a second predetermined trigger condition is met, report the information to the network side device when the second predetermined trigger condition is met.

In this embodiment of this application, UE may report information to a network side device in a case of determining that a LBT failure occurs, where the information is used to indicate that access of an unlicensed channel in an FBE fails. In this solution, because the information may indicate that access of the unlicensed channel in the FBE fails, after receiving the information, the network side device may determine a channel environment of the unlicensed channel according to the information. In this way, an interference source can be located in a timely manner and a resource scheduling algorithm of a radio network can be adjusted in a timely manner without affecting URLLC service quality.

The LBT failure reporting apparatus in this embodiment of this application may be an apparatus, or may be a component, an integrated circuit, or a chip in UE. The apparatus may be a mobile terminal, or a non-mobile terminal. For example, the mobile device may include but is not limited to the types of the foregoing listed UE 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The LBT failure reporting apparatus in this embodiment of this application may be an apparatus with an operating system. The operating system may be an Android (Android) operating system, an iOS operating system, or another possible operating system. This is not specifically limited in this embodiment of this application.

FIG. 12 is a possible schematic structural diagram of an LBT failure reporting apparatus according to an embodiment of this application. As shown in FIG. 12, an LBT failure reporting apparatus 600 may include a receiving module 601, where the receiving module 601 is configured to receive information reported by user equipment UE, where the information is reported by the UE in a case of determining that a listen before talk LBT failure occurs, and the information is used to indicate that access of an unlicensed channel in a frame structure based channel access mechanism FBE fails.

Optionally, in a case where the LBT failure is an LBT failure that occurs on sending of a target PUSCH used to carry logical channel data or a target PUCCH used to carry uplink control information related to logical channel data, the information includes time point information of occurring the LBT failure; in a case where the LBT failure is an LBT failure corresponding to a preconfigured uplink transmission grant configured or activated by the network side device for the UE, the information includes at least one of the following: a number configured for a preconfigured uplink transmission grant, and a number of the preconfigured uplink transmission grant; and the time point information includes at least one of the following: a system frame number SFN, a slot number, a symbol number, and a number of an FFP.

Optionally, the target PUSCH includes any one of the following: a PUSCH used to carry ultra-reliable and low latency communication URLLC service data, and a PUSCH whose physical layer priority meets a first predetermined condition; and the target PUCCH includes any one of the following: a PUCCH used to carry a hybrid automatic repeat request HARQ feedback, a PUCCH used to carry channel state information CSI, a PUCCH used to carry a target scheduling request SR, and a PUCCH whose physical layer priority meets a second predetermined condition. For example, the first predetermined condition may be that a physical layer priority of a PUSCH is high, and the second predetermined condition may be that a physical layer priority of a PUCCH is high.

Optionally, the target SR is an SR triggered by a data logical channel of a preconfigured service.

Optionally, the LBT failure reporting apparatus 600 further includes a sending module, where the sending module is configured to: before the receiving information reported by UE, send first configuration information to the UE, where the first configuration information is used to instruct the UE to periodically report the information or report the information when a second predetermined trigger condition is met.

Optionally, the LBT failure reporting apparatus 600 further includes a sending module, where the sending module is configured to: before the receiving information reported by UE, send a second query message to the UE, where the second query message is used to query whether access of the unlicensed channel in the FBE fails.

The LBT failure reporting apparatus provided in this embodiment of this application can implement the processes implemented in the method embodiments in FIG. 1, FIG. 7, and FIG. 8 and achieve a same technical effect. To avoid repetition, details are not described herein again.

Optionally, as shown in FIG. 13, an embodiment of this application further provides a communication device 700, including a processor 701, a memory 702, and a program or an instruction stored in the memory 702 and executable on the processor 701. For example, when the communication device 700 is UE, when the program or the instruction is executed by the processor 701, the processes of the foregoing channel measurement method or LBT failure reporting method embodiment are implemented and a same technical effect can be achieved. When the communication device 700 is a network side device, when the program or the instruction is executed by the processor 701, the processes of the foregoing channel measurement method or LBT failure reporting method embodiment are implemented and a same technical effect can be achieved. To avoid repetition, details are not described herein again.

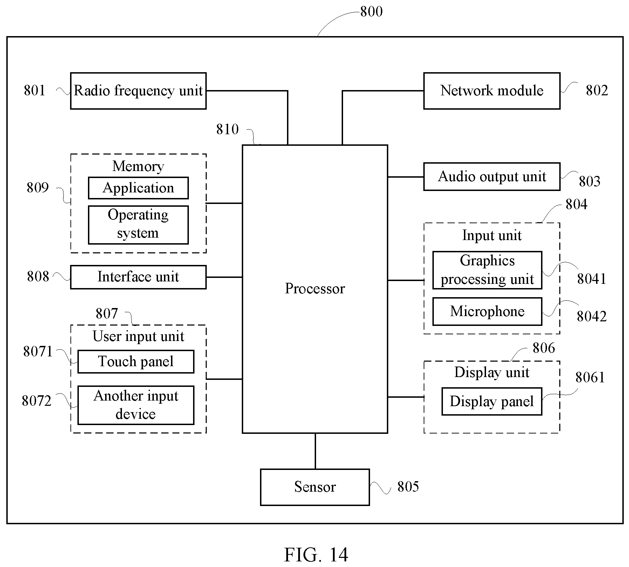

FIG. 14 is a schematic structural diagram of hardware of UE according to an embodiment of this application. UE 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the UE 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 14 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. Optionally, the display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, and an application or an instruction required by at least one function (for example, a sound playing function or an image playing function). In addition, the memory 809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It can be understood that, alternatively, the modem processor may not be integrated into the processor 810.

When the channel measurement method is performed by the UE 800, the processor 810 is configured to: obtain target configuration information, where the target configuration information is used to configure a measurement window, the measurement window includes M measurement child windows, each measurement child window is located within an idle period of a fixed frame period FFP of an unlicensed channel in a frame structure based channel access mechanism FBE, and M is a positive integer; and measure the M measurement child windows according to the target configuration information.

Optionally, the target configuration information is specifically used to configure at least one of the following: an offset of a start position of each measurement child window relative to a start position of an idle period of a corresponding FFP; an end position of each measurement child window is an end position of an idle period of a corresponding FFP; and an interval between any two adjacent measurement child windows in the M measurement child windows is at least one FFP.

Optionally, the target configuration information is specifically used to configure any one of the following: a start measurement FFP of the measurement window; a start measurement FFP and an end measurement FFP of the measurement window; a start measurement FFP of the measurement window and the measurement window with a window length of N FFPs; start time point information of the measurement window; and start time point information and end time point information of the measurement window, where the start time point information includes at least one of the following: a start frame number, a start slot number, and a start symbol number; the end time point information includes at least one of the following: an end frame number, an end slot number, and an end symbol number; and N is a positive integer.

Optionally, the radio frequency unit 801 is configured to: after the processor 810 measures the M measurement child windows according to the target configuration information, report first information to a network side device, where the first information is used to indicate occupation measurement information of the unlicensed channel.

Optionally, the first information includes any one of the following: M first receive powers, one second receive power, an occupation proportion, the unlicensed channel being not occupied, and the unlicensed channel being occupied, where each first receive power includes any one of the following: an average value of at least one receive power corresponding to one measurement child window and a maximum value of at least one receive power corresponding to one measurement child window; the second receive power includes any one of the following: an average value of all receive powers corresponding to the M measurement child windows, and a maximum value of all the receive powers corresponding to the M measurement child windows; and the occupation proportion is a proportion of occupied measurement child windows in the M measurement child windows.

Optionally, the processor 810 is further configured to: in a case where the first information includes the unlicensed channel being not occupied or the unlicensed channel being occupied, before the reporting first information to a network side device, determine, based on second information, whether the unlicensed channel is occupied; or in a case where the first information includes the occupation proportion, before the reporting first information to a network side device, determine the occupation proportion based on third information, where the second information includes any one of the following: the M first receive powers, the one second receive power, and the occupation proportion; and the third information includes the M first receive powers.

Optionally, the radio frequency unit 801 is specifically configured to: report the first information to the network side device according to the target configuration information, where the target configuration information is further used to instruct to report the first information; or when a first query message from the network side device is received, report the first information to the network side device, where the first query message is used to query the occupation measurement information of the unlicensed channel.

Optionally, the radio frequency unit 801 is specifically configured to: in a case where the target configuration information specifically instructs to periodically report the first information, periodically report the first information to the network side device; or in a case where the target configuration information specifically instructs to report the first information when a first predetermined trigger condition is met, report the first information to the network side device when the first predetermined trigger condition is met.

In this embodiment of this application, UE may obtain target configuration information, where the target configuration information is used to configure a measurement window, the measurement window includes M measurement child windows, each measurement child window is located within an idle period of an FFP of an unlicensed channel in an FBE, and M is a positive integer; and the M measurement child windows are measured according to the target configuration information. In this solution, each measurement child window is located within an idle period of an FFP of an unlicensed channel in an FBE. Therefore, the M measurement child windows are measured, that is, idle periods of M FFPs are measured. In this way, when channel measurement is performed, a channel occupation time (Channel Occupation Time, COT) of an FFP is not measured. As a result, channel access of the UE will not fail due to channel occupation by other UE in a system (for unlicensed access in an FBE mode, a plurality of UEs in the system can share a same unlicensed channel without hindering each other's access). Further, after performing measurement, the UE may report occupation measurement information of the unlicensed channel to a network side device, and the network side device may determine a channel environment of the unlicensed channel according to the occupation measurement information. In this way, an interference source can be located in a timely manner and a resource scheduling algorithm of a radio network can be adjusted in a timely manner without affecting URLLC service quality.

When the LBT failure reporting method is performed by the UE 800, the radio frequency unit 801 is configured to: in a case of determining that a listen before talk LBT failure occurs, report information to a network side device, where the information is used to indicate that access of an unlicensed channel in a frame structure based channel access mechanism FBE fails.

In a case where the LBT failure is an LBT failure that occurs on sending of a target physical uplink shared channel PUSCH used to carry logical channel data or a target PUCCH used to carry uplink control information related to logical channel data, the information includes time point information of occurring the LBT failure; in a case where the LBT failure is an LBT failure corresponding to a preconfigured uplink transmission grant configured or activated by the network side device for the UE, the information includes at least one of the following: a number configured for a preconfigured uplink transmission grant, and a number of the preconfigured uplink transmission grant; and the time point information includes at least one of the following: a system frame number SFN, a slot number, a symbol number, and a number of an FFP.

Optionally, the target PUSCH includes any one of the following: a PUSCH used to carry ultra-reliable and low latency communication URLLC service data, and a PUSCH whose physical layer priority meets a first predetermined condition; and the target PUCCH includes any one of the following: a PUCCH used to carry a hybrid automatic repeat request HARQ feedback, a PUCCH used to carry channel state information CSI, a PUCCH used to carry a target scheduling request SR, and a PUCCH whose physical layer priority meets a second predetermined condition.

Optionally, the target SR is an SR triggered by a data logical channel of a preconfigured service.

Optionally, the radio frequency unit 801 is specifically configured to: report the information to the network side device according to first configuration information, where the first configuration information is used to instruct to report the information; or when a second query message is received from the network side device, report the information to the network side device, where the second query message is used to query whether access of the unlicensed channel in the FBE fails.

Optionally, the radio frequency unit 801 is further configured to: before the reporting the information to the network side device according to first configuration information, receive the first configuration information from the network side device; and is specifically configured to: in a case where the first configuration information specifically instructs to periodically report the information, periodically report the information to the network side device; or in a case where the first configuration information specifically instructs to report the information when a second predetermined trigger condition is met, report the information to the network side device when the second predetermined trigger condition is met.

In this embodiment of this application, UE may report information to a network side device in a case of determining that a LBT failure occurs, where the information is used to indicate that access of an unlicensed channel in an FBE fails. In this solution, because the information may indicate that access of the unlicensed channel in the FBE fails, after receiving the information, the network side device may determine a channel environment of the unlicensed channel according to the information. In this way, an interference source can be located in a timely manner and a resource scheduling algorithm of a radio network can be adjusted in a timely manner without affecting URLLC service quality.

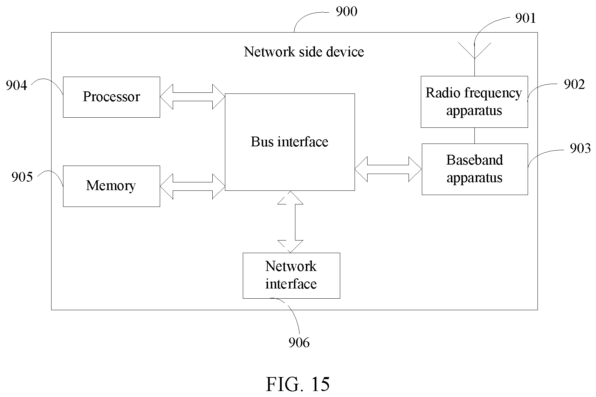

Specifically, an embodiment of this application further provides a network side device. As shown in FIG. 15, a network side device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes information that needs to be sent, and sends processed information to the radio frequency apparatus 902. The radio frequency apparatus 902 processes the received information, and sends processed information by using the antenna 901.

The frequency band processing apparatus may be located in the baseband apparatus 903. The method performed by the network side device in the foregoing embodiment may be implemented in the baseband apparatus 903. The baseband apparatus 903 includes a processor 904 and a memory 905.

The baseband apparatus 903 may include, for example, at least one baseband board, where a plurality of chips are disposed on the baseband board. As shown in FIG. 15, one chip is, for example, the processor 904, which is connected to the memory 905, so as to invoke a program in the memory 905 to perform operations of the network side device shown in the foregoing method embodiment.

The baseband apparatus 903 may further include a network interface 906, configured to exchange information with the radio frequency apparatus 902. For example, the interface is a common public radio interface (common public radio interface, CPRI for short).

Specifically, the network side device in this embodiment of the present invention further includes an instruction or a program stored in the memory 905 and executable on the processor 904. The processor 904 invokes the instruction or the program in the memory 905 to perform the method performed by the modules shown in FIG. 10 or FIG. 12, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing channel measurement method or LBT failure reporting method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to execute a program or an instruction to implement the processes of the foregoing channel measurement method or LBT failure reporting method embodiment and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network side device, or the like) to perform the methods in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from this application and the protection scope of the claims.

The invention is only limited by the claims. And examples and technical descriptions of apparatuses, products and/or methods in the description and/or drawings which are not covered by the claims are presented not as embodiments of the invention but as background art or examples useful for understanding the invention.

**Claims**

1. An LBT failure reporting method, performed by user equipment, UE (11), and comprising:

   in a case of determining that a listen before talk, LBT, failure occurs, reporting (201) information to a network side device (12);
   **characterized in that**,
   the information is used to indicate that access of an unlicensed channel in a frame structure based channel access mechanism fails; and
   in a case where the LBT failure is an LBT failure corresponding to a preconfigured uplink transmission grant configured or activated by the network side device (12) for the UE (11), the information comprises at least one of the following: a number configured for a preconfigured uplink transmission grant, and a number of the preconfigured uplink transmission grant.

2. The method according to claim 1, wherein in a case where the LBT failure is an LBT failure that occurs on sending of a target physical uplink shared channel, PUSCH, used to carry logical channel data or a target physical uplink control channel, PUCCH, used to carry uplink control information related to logical channel data, the information comprises time point information of occurring the LBT failure; wherein
   the time point information comprises at least one of the following: a system frame number, SFN, a slot number, a symbol number, and a number of a fixed frame period, FFP.

3. The method according to claim 2, wherein the target PUSCH comprises any one of the following: a PUSCH used to carry ultra-reliable and low latency communication, URLLC, service data, and a PUSCH whose physical layer priority meets a first predetermined condition; and
   the target PUCCH comprises any one of the following: a PUCCH used to carry a hybrid automatic repeat request, HARQ, feedback, a PUCCH used to carry channel state information, CSI, a PUCCH used to carry a target scheduling request, SR, and a PUCCH whose physical layer priority meets a second predetermined condition.

4. The method according to claim 3, wherein the target SR is an SR triggered by a data logical channel of a preconfigured service.

5. The method according to any one of claims 1 to 4, wherein the reporting (201) information to a network side device (12) comprises:

   reporting the information to the network side device (12) according to first configuration information, wherein the first configuration information is used to instruct to report the information;
   or
   when a second query message is received from the network side device (12), reporting the information to the network side device (12), wherein the second query message is used to query whether access of the unlicensed channel in the frame structure based channel access mechanism fails.

6. The method according to claim 5, wherein before the reporting the information to the network side device (12) according to first configuration information, the method further comprises:

   receiving (204) the first configuration information from the network side device (12); and

the reporting the information to the network side device (12) according to first configuration information comprises:

in a case where the first configuration information specifically instructs to periodically report the information, periodically reporting (201a1) the information to the network side device (12); or

in a case where the first configuration information specifically instructs to report the information when a second predetermined trigger condition is met, reporting (201a2) the information to the network side device (12) when the second predetermined trigger condition is met.

7. An LBT failure reporting method, performed by a network side device (12) and comprising:

receiving (202) information reported by user equipment, UE (11), wherein the information is reported by the UE (11) in a case of determining that a listen before talk, LBT, failure occurs;

**characterized in that**,

the information is used to indicate that access of an unlicensed channel in a frame structure based channel access mechanism fails; and

in a case where the LBT failure is an LBT failure corresponding to a preconfigured uplink transmission grant configured or activated by the network side device (12) for the UE (11), the information comprises at least one of the following: a number configured for a preconfigured uplink transmission grant, and a number of the preconfigured uplink transmission grant.

8. The method according to claim 7, wherein in a case where the LBT failure is an LBT failure that occurs on sending of a target physical uplink shared channel, PUSCH, used to carry logical channel data or a target physical uplink control channel, PUCCH, used to carry uplink control information related to logical channel data, the information comprises time point information of occurring the LBT failure; wherein

the time point information comprises at least one of the following: a system frame number, SFN, a slot number, a symbol number, and a number of a fixed frame period, FFP.

9. The method according to claim 8, wherein the target PUSCH comprises any one of the following: a PUSCH used to carry ultra-reliable and low latency communication, URLLC, service data, and a PUSCH whose physical layer priority meets a first predetermined condition; and

the target PUCCH comprises any one of the following: a PUCCH used to carry a hybrid automatic repeat request, HARQ, feedback, a PUCCH used to carry channel state information, CSI, a PUCCH used to carry a target scheduling request, SR, and a PUCCH whose physical layer priority meets a second predetermined condition.

10. The method according to claim 9, wherein the target SR is an SR triggered by a data logical channel of a preconfigured service.

11. The method according to any one of claims 7 to 10, wherein before the receiving (202) information reported by UE (11), the method further comprises:

sending (203) first configuration information to the UE (11), wherein the first configuration information is used to instruct the UE (11) to periodically report the information or report the information when a second predetermined trigger condition is met.

12. The method according to any one of claims 7 to 10, wherein before the receiving (202) information reported by UE (11), the method further comprises:

sending a second query message to the UE (11), wherein the second query message is used to query whether access of the unlicensed channel in the frame structure based channel access mechanism fails.

13. A user equipment (800), comprising a processor (810), a memory (809), and a program or an instruction stored in the memory (809) and executable on the processor (810), wherein when the program or the instruction is executed by the processor (810), the steps of the LBT failure reporting method according to any one of claims 1 to 6 are implemented.

14. A network side device (900), comprising a processor (904), a memory (905), and a program or an instruction stored in the memory (905) and executable on the processor (904), wherein when the program or the instruction is executed by the processor (904), the steps of the LBT failure reporting method according to any one of claims 7 to 12 are implemented.

**15.** A readable storage medium, wherein the readable storage medium stores a program or an instruction, and when the program or the instruction is executed by a processor (810) of a user equipment (800), the LBT failure reporting method according to any one of claims 1 to 6 is implemented, or when the program or the instruction is executed by a processor (904) of a network side device (900), the LBT failure reporting method according to any one of claims 7 to 12 is implemented.

**Patentansprüche**

**1.** Ein Verfahren zur Meldung von LBT-Fehlern, das von einem Benutzergerät, UE (11), durchgeführt wird und Folgendes beinhaltet:

in einem Fall des Bestimmens, dass ein Listen-before-Talk-Fehler, LBT-Fehler, auftritt, Melden (201) von Informationen an eine netzwerkseitige Vorrichtung (12);
**dadurch gekennzeichnet, dass**
die Informationen verwendet werden, um anzuzeigen, dass der Zugriff auf einen unlizenzierten Kanal in einem auf einer Rahmenstruktur basierenden Kanalzugriffsmechanismus fehlschlägt; und
in einem Fall, in dem der LBT-Fehler ein LBT-Fehler ist, der einer vorkonfigurierten Uplink-Übertragungsgewährung entspricht, die von der netzwerkseitigen Vorrichtung (12) für das UE (11) konfiguriert oder aktiviert wird, die Informationen mindestens eines der Folgenden beinhalten: eine Nummer, die für eine vorkonfigurierte Uplink-Übertragungsgewährung konfiguriert ist, und eine Nummer der vorkonfigurierten Uplink-Übertragungsgewährung.

**2.** Verfahren gemäß Anspruch 1, wobei in einem Fall, in dem der LBT-Fehler ein LBT-Fehler ist, der beim Senden eines gemeinsam genutzten physischen Ziel-Uplink-Kanals, PUSCH, der zum Tragen von logischen Kanaldaten verwendet wird, oder eines physischen Ziel-Uplink-Steuerkanals, PUCCH, der zum Tragen von Uplink-Steuerinformationen in Bezug auf logische Kanaldaten verwendet wird, auftritt, die Informationen Zeitpunktinformationen des Auftretens des LBT-Fehlers beinhalten; wobei
die Zeitpunktinformationen mindestens eines der Folgenden beinhalten: eine Systemrahmennummer, SFN, eine Schlitznummer, eine Symbolnummer und eine Nummer einer festen Rahmenperiode, FFP.

**3.** Verfahren gemäß Anspruch 2, wobei der Ziel-PUSCH eines der Folgenden beinhaltet:

einen PUSCH, der zum Tragen von ultrazuverlässigen Kommunikationsdienstdaten mit geringer Latenz, URLLC, verwendet wird, und einen PUSCH, dessen Priorität der physischen Schicht eine erste vorbestimmte Bedingung erfüllt; und
der Ziel-PUCCH eines der Folgenden beinhaltet: einen PUCCH, der zum Tragen einer Rückmeldung einer hybriden automatischen Wiederholungsanforderung, HARQ,
verwendet wird, einen PUCCH, der zum Tragen von Kanalzustandsinformationen, CSI, verwendet wird, einen PUCCH, der zum Tragen einer Zielplanungsanforderung, SR, verwendet wird, und einen PUCCH, dessen Priorität der physischen Schicht eine zweite vorbestimmte Bedingung erfüllt.

**4.** Verfahren gemäß Anspruch 3, wobei die Ziel-SR eine SR ist, die durch einen logischen Datenkanal eines vorkonfigurierten Dienstes ausgelöst wird.

**5.** Verfahren gemäß einem der Ansprüche 1 bis 4, wobei das Melden (201) von Informationen an eine netzwerkseitige Vorrichtung (12) Folgendes beinhaltet:

Melden der Informationen an die netzwerkseitige Vorrichtung (12) gemäß ersten Konfigurationsinformationen, wobei die ersten Konfigurationsinformationen verwendet werden, um anzuweisen, die Informationen zu melden; oder
wenn eine zweite Abfragenachricht von der netzwerkseitigen Vorrichtung (12) empfangen wird, Melden der Informationen an die netzwerkseitige Vorrichtung (12), wobei die zweite Abfragenachricht verwendet wird, um abzufragen, ob der Zugriff auf den unlizenzierten Kanal in dem auf einer Rahmenstruktur basierenden Kanalzugriffsmechanismus fehlschlägt.

**6.** Verfahren gemäß Anspruch 5, wobei das Verfahren vor dem Melden der Informationen an die netzwerkseitige Vorrichtung (12) gemäß ersten Konfigurationsinformationen ferner Folgendes beinhaltet:

Empfangen (204) der ersten Konfigurationsinformationen von der netzwerkseitigen Vorrichtung (12); und das Melden der Informationen an die netzwerkseitige Vorrichtung (12) gemäß ersten Konfigurationsinformationen Folgendes beinhaltet:

in einem Fall, in dem die ersten Konfigurationsinformationen spezifisch anweisen, die Informationen periodisch zu melden, periodisches Melden (201a1) der Informationen an die netzwerkseitige Vorrichtung (12); oder

in einem Fall, in dem die ersten Konfigurationsinformationen spezifisch anweisen, die Informationen zu melden, wenn eine zweite vorbestimmte Auslösebedingung erfüllt ist, Melden (201a2) der Informationen an die netzwerkseitige Vorrichtung (12), wenn die zweite vorbestimmte Auslösebedingung erfüllt ist.

7. Ein Verfahren zur Meldung von LBT-Fehlern, das von einer netzwerkseitigen Vorrichtung (12) durchgeführt wird und Folgendes beinhaltet:

Empfangen (202) von Informationen, die von einem Benutzergerät, UE (11), gemeldet werden, wobei die Informationen von dem UE (11) in einem Fall des Bestimmens, dass ein Listen-before-Talk-Fehler, LBT-Fehler, auftritt, gemeldet werden;
**dadurch gekennzeichnet, dass**
die Informationen verwendet werden, um anzuzeigen, dass der Zugriff auf einen unlizenzierten Kanal in einem auf einer Rahmenstruktur basierenden Kanalzugriffsmechanismus fehlschlägt; und
in einem Fall, in dem der LBT-Fehler ein LBT-Fehler ist, der einer vorkonfigurierten Uplink-Übertragungsgewährung entspricht, die von der netzwerkseitigen Vorrichtung (12) für das UE (11) konfiguriert oder aktiviert wird, die Informationen mindestens eines der Folgenden beinhalten: eine Nummer, die für eine vorkonfigurierte Uplink-Übertragungsgewährung konfiguriert ist, und eine Nummer der vorkonfigurierten Uplink-Übertragungsgewährung.

8. Verfahren gemäß Anspruch 7, wobei in einem Fall, in dem der LBT-Fehler ein LBT-Fehler ist, der beim Senden eines gemeinsam genutzten physischen Ziel-Uplink-Kanals, PUSCH, der zum Tragen von logischen Kanaldaten verwendet wird, oder eines physischen Ziel-Uplink-Steuerkanals, PUCCH, der zum Tragen von Uplink-Steuerinformationen in Bezug auf logische Kanaldaten verwendet wird, auftritt, die Informationen Zeitpunktinformationen des Auftretens des LBT-Fehlers beinhalten;
wobei
die Zeitpunktinformationen mindestens eines der Folgenden beinhalten: eine Systemrahmennummer, SFN, eine Schlitznummer, eine Symbolnummer und eine Nummer einer festen Rahmenperiode, FFP.

9. Verfahren gemäß Anspruch 8, wobei der Ziel-PUSCH eines der Folgenden beinhaltet:

einen PUSCH, der zum Tragen von ultrazuverlässigen Kommunikationsdienstdaten mit geringer Latenz, URLLC, verwendet wird, und einen PUSCH, dessen Priorität der physischen Schicht eine erste vorbestimmte Bedingung erfüllt; und
der Ziel-PUCCH eines der Folgenden beinhaltet: einen PUCCH, der zum Tragen einer Rückmeldung einer hybriden automatischen Wiederholungsanforderung, HARQ,
verwendet wird, einen PUCCH, der zum Tragen von Kanalzustandsinformationen, CSI, verwendet wird, einen PUCCH, der zum Tragen einer Zielplanungsanforderung, SR, verwendet wird, und einen PUCCH, dessen Priorität der physischen Schicht eine zweite vorbestimmte Bedingung erfüllt.

10. Verfahren gemäß Anspruch 9, wobei die Ziel-SR eine SR ist, die durch einen logischen Datenkanal eines vorkonfigurierten Dienstes ausgelöst wird.

11. Verfahren gemäß einem der Ansprüche 7 bis 10, wobei das Verfahren vor dem Empfangen (202) von Informationen, die von dem UE (11) gemeldet werden, ferner Folgendes beinhaltet:
Senden (203) von ersten Konfigurationsinformationen an das UE (11), wobei die ersten Konfigurationsinformationen verwendet werden, um das UE (11) anzuweisen, die Informationen periodisch zu melden oder die Informationen zu melden, wenn eine zweite vorbestimmte Auslösebedingung erfüllt ist.

12. Verfahren gemäß einem der Ansprüche 7 bis 10, wobei das Verfahren vor dem Empfangen (202) von Informationen, die von dem UE (11) gemeldet werden, ferner Folgendes beinhaltet:

Senden einer zweiten Abfragenachricht an das UE (11), wobei die zweite Abfragenachricht verwendet wird, um abzufragen, ob der Zugriff auf den unlizenzierten Kanal in dem auf einer Rahmenstruktur basierenden Kanalzugriffsmechanismus fehlschlägt.

13. Ein Benutzergerät (800), das einen Prozessor (810), einen Speicher (809) und ein Programm oder eine Anweisung, das/die in dem Speicher (809) gespeichert ist und auf dem Prozessor (810) ausführbar ist, beinhaltet, wobei, wenn das Programm oder die Anweisung von dem Prozessor (810) ausgeführt wird, die Schritte des Verfahrens zur Meldung von LBT-Fehlern gemäß einem der Ansprüche 1 bis 6 implementiert werden.

14. Eine netzwerkseitige Vorrichtung (900), die einen Prozessor (904), einen Speicher (905) und ein Programm oder eine Anweisung, das/die in dem Speicher (905) gespeichert ist und auf dem Prozessor (904) ausführbar ist, beinhaltet, wobei, wenn das Programm oder die Anweisung von dem Prozessor (904) ausgeführt wird, die Schritte des Verfahrens zur Meldung von LBT-Fehlern gemäß einem der Ansprüche 7 bis 12 implementiert werden.

15. Ein lesbares Speichermedium, wobei das lesbare Speichermedium ein Programm oder eine Anweisung speichert und, wenn das Programm oder die Anweisung von einem Prozessor (810) eines Benutzergeräts (800) ausgeführt wird, das Verfahren zur Meldung von LBT-Fehlern gemäß einem der Ansprüche 1 bis 6 implementiert wird oder, wenn das Programm oder die Anweisung von einem Prozessor (904) einer netzwerkseitigen Vorrichtung (900) ausgeführt wird, das Verfahren zur Meldung von LBT-Fehlern gemäß einem der Ansprüche 7 bis 12 implementiert wird.

**Revendications**

1. Un procédé de rapport d'échec LBT, réalisé par un équipement utilisateur, UE (11), et comprenant :

dans un cas de détermination qu'un échec de l'écoute avant émission, LBT (*listen before talk*), se produit, le rapport (201) d'informations à un dispositif côté réseau (12) ;
**caractérisé en ce que**,
les informations sont utilisées pour indiquer qu'un accès d'un canal sans licence dans un mécanisme d'accès au canal basé sur une structure de trame échoue ; et
dans un cas où l'échec LBT est un échec LBT correspondant à une autorisation de transmission en liaison montante préconfigurée configurée ou activée par le dispositif côté réseau (12) pour l'UE (11), les informations comprennent au moins l'un des éléments suivants : un numéro configuré pour une autorisation de transmission en liaison montante préconfigurée, et un numéro de l'autorisation de transmission en liaison montante préconfigurée.

2. Le procédé selon la revendication 1, dans lequel dans un cas où l'échec LBT est un échec LBT qui se produit lors de l'envoi d'un canal partagé en liaison montante physique, PUSCH (*physical uplink shared channel*), cible utilisé pour transporter des données de canal logique ou d'un canal de commande en liaison montante physique, PUCCH (*physical uplink control channel*), cible utilisé pour transporter des informations de commande en liaison montante relatives à des données de canal logique, les informations comprennent des informations de point temporel auquel se produit l'échec LBT ; dans lequel
les informations de point temporel comprennent au moins l'un des éléments suivants : un numéro de trame système, SFN (*system frame number*), un numéro de créneau, un numéro de symbole, et un numéro d'une période de trame fixe, FFP (*fixed frame period*).

3. Le procédé selon la revendication 2, dans lequel le PUSCH cible comprend l'un quelconque des éléments suivants : un PUSCH utilisé pour transporter des données de service de communication ultra fiable et à faible latence, URLLC (*ultra-reliable and low latency communication*), et un PUSCH dont la priorité de couche physique satisfait à une première condition prédéterminée ; et
le PUCCH cible comprend l'un quelconque des éléments suivants : un PUCCH utilisé pour transporter une rétroaction de demande de répétition automatique hybride, HARQ (*hybrid automatic repeat request*), un PUCCH utilisé pour transporter des informations d'état de canal, CSI (*channel state information*), un PUCCH utilisé pour transporter une demande d'ordonnancement, SR (*scheduling request*), cible, et un PUCCH dont la priorité de couche physique satisfait à une deuxième condition prédéterminée.

4. Le procédé selon la revendication 3, dans lequel la SR cible est une SR déclenchée par un canal logique de données d'un service préconfiguré.

**5.** Le procédé selon l'une quelconque des revendications 1 à 4, dans lequel le rapport (201) d'informations à un dispositif côté réseau (12) comprend :

le rapport des informations au dispositif côté réseau (12) selon des premières informations de configuration, les premières informations de configuration étant utilisées pour donner l'instruction de rapporter les informations ; ou

lorsqu'un deuxième message d'interrogation est reçu en provenance du dispositif côté réseau (12), le rapport des informations au dispositif côté réseau (12), le deuxième message d'interrogation étant utilisé pour interroger afin de savoir si un accès du canal sans licence dans le mécanisme d'accès au canal basé sur une structure de trame échoue.

**6.** Le procédé selon la revendication 5, dans lequel avant le rapport des informations au dispositif côté réseau (12) selon des premières informations de configuration, le procédé comprend en outre :

la réception (204) des premières informations de configuration en provenance du dispositif côté réseau (12) ; et le rapport des informations au dispositif côté réseau (12) selon des premières informations de configuration comprend :

dans un cas où les premières informations de configuration donnent spécifiquement l'instruction de rapporter périodiquement les informations, le rapport périodique (201a1) des informations au dispositif côté réseau (12) ; ou

dans un cas où les premières informations de configuration donnent spécifiquement l'instruction de rapporter les informations lorsqu'une deuxième condition de déclenchement prédéterminée est satisfaite, le rapport (201a2) des informations au dispositif côté réseau (12) lorsque la deuxième condition de déclenchement prédéterminée est satisfaite.

**7.** Un procédé de rapport d'échec LBT, réalisé par un dispositif côté réseau (12) et comprenant :

la réception (202) d'informations rapportées par un équipement utilisateur, UE (11), les informations étant rapportées par l'UE (11) dans un cas de détermination qu'un échec de l'écoute avant émission, LBT, se produit ; **caractérisé en ce que**,

les informations sont utilisées pour indiquer qu'un accès d'un canal sans licence dans un mécanisme d'accès au canal basé sur une structure de trame échoue ; et

dans un cas où l'échec LBT est un échec LBT correspondant à une autorisation de transmission en liaison montante préconfigurée configurée ou activée par le dispositif côté réseau (12) pour l'UE (11), les informations comprennent au moins l'un des éléments suivants : un numéro configuré pour une autorisation de transmission en liaison montante préconfigurée, et un numéro de l'autorisation de transmission en liaison montante préconfigurée.

**8.** Le procédé selon la revendication 7, dans lequel dans un cas où l'échec LBT est un échec LBT qui se produit lors de l'envoi d'un canal partagé en liaison montante physique, PUSCH, cible utilisé pour transporter des données de canal logique ou d'un canal de commande en liaison montante physique, PUCCH, cible utilisé pour transporter des informations de commande en liaison montante relatives à des données de canal logique, les informations comprennent des informations de point temporel auquel se produit l'échec LBT ; dans lequel les informations de point temporel comprennent au moins l'un des éléments suivants :

un numéro de trame système, SFN, un numéro de créneau, un numéro de symbole, et un numéro d'une période de trame fixe, FFP.

**9.** Le procédé selon la revendication 8, dans lequel le PUSCH cible comprend l'un quelconque des éléments suivants : un PUSCH utilisé pour transporter des données de service de communication ultra fiable et à faible latence, URLLC, et un PUSCH dont la priorité de couche physique satisfait à une première condition prédéterminée ; et le PUCCH cible comprend l'un quelconque des éléments suivants : un PUCCH utilisé pour transporter une rétroaction de demande de répétition automatique hybride, HARQ, un PUCCH utilisé pour transporter des informations d'état de canal, CSI, un PUCCH utilisé pour transporter une demande d'ordonnancement, SR, cible, et un PUCCH dont la priorité de couche physique satisfait à une deuxième condition prédéterminée.

**10.** Le procédé selon la revendication 9, dans lequel la SR cible est une SR déclenchée par un canal logique de données d'un service préconfiguré.

**11.** Le procédé selon l'une quelconque des revendications 7 à 10, dans lequel avant la réception (202) d'informations rapportées par l'UE (11), le procédé comprend en outre :
l'envoi (203) de premières informations de configuration à l'UE (11), les premières informations de configuration étant utilisées pour donner l'instruction à l'UE (11) de rapporter périodiquement les informations ou de rapporter les informations lorsqu'une deuxième condition de déclenchement prédéterminée est satisfaite.

**12.** Le procédé selon l'une quelconque des revendications 7 à 10, dans lequel avant la réception (202) d'informations rapportées par l'UE (11), le procédé comprend en outre : l'envoi d'un deuxième message d'interrogation à l'UE (11), le deuxième message d'interrogation étant utilisé pour interroger afin de savoir si un accès du canal sans licence dans le mécanisme d'accès au canal basé sur une structure de trame échoue.

**13.** Un équipement utilisateur (800), comprenant un processeur (810), une mémoire (809), et un programme ou une instruction stocké(e) dans la mémoire (809) et exécutable sur le processeur (810), dans lequel lorsque le programme ou l'instruction est exécuté(e) par le processeur (810), les étapes du procédé de rapport d'échec LBT selon l'une quelconque des revendications 1 à 6 sont mises en œuvre.

**14.** Un dispositif côté réseau (900), comprenant un processeur (904), une mémoire (905), et un programme ou une instruction stocké(e) dans la mémoire (905) et exécutable sur le processeur (904), dans lequel lorsque le programme ou l'instruction est exécuté(e) par le processeur (904), les étapes du procédé de rapport d'échec LBT selon l'une quelconque des revendications 7 à 12 sont mises en œuvre.

**15.** Un support de stockage lisible, le support de stockage lisible stockant un programme ou une instruction, et lorsque le programme ou l'instruction est exécuté(e) par un processeur (810) d'un équipement utilisateur (800), le procédé de rapport d'échec LBT selon l'une quelconque des revendications 1 à 6 étant mis en œuvre, ou lorsque le programme ou l'instruction est exécuté(e) par un processeur (904) d'un dispositif côté réseau (900), le procédé de rapport d'échec LBT selon l'une quelconque des revendications 7 à 12 étant mis en œuvre.

Network side device

FIG. 1

UE obtains target configuration information

The UE measures M measurement child windows according to the target configuration information

FIG. 2

FFP    FBE COT

Idle period

Measurement window

X$^{th}$ FFP    Y$^{th}$ FFP

Measurement period

FIG. 3

```
┌──────────────────┐                                    ┌──────────────────────┐
│        UE        │                                    │  Network side device │
└────────┬─────────┘                                    └───────────┬──────────┘
         │                                                          │
         │  103. Send target configuration information to the       │
         │                 user equipment UE                        │
         │◄─────────────────────────────────────────────────────────
┌────────┴─────────┐                                                │
│ 101. Obtain the target configuration                              │
│        information                                                │
└──────────────────┘                                                │
┌──────────────────┐                                                │
│ 102. Measure M measurement child                                  │
│  windows according to the target                                  │
│   configuration information                                       │
└──────────────────┘                                                │
         │                                                          │
         │  104. In a case that it is determined that a target listen before talk LBT
         │    failure occurs, report target information to the network side device
         │──────────────────────────────────────────────────────────►
         │                                            ┌───────────────┴────────────┐
         │                                            │ 105. Receive first information reported
         │                                            │          by the UE          │
         │                                            └─────────────────────────────┘
         │                                                          │
```

FIG. 4

FIG. 5

Idle period           FFP     FBE COT

One measurement child window in every four FFPs

Measurement period

FIG. 6

| UE | | Network side device |

201. In a case of determining that a target listen before talk LBT failure occurs, report target information to the network side device

202. Receive target information reported by the user equipment UE

FIG. 7

| UE | | Network side device |
|---|---|---|

203. Send first configuration information to the UE

204. Receive the first configuration information from the network side device

201a1. In a case that the first configuration information specifically instructs to periodically report target information, periodically report the target information to the network side device

201a2. In a case that the first configuration information specifically instructs to report target information when a second predetermined trigger condition is met, report the target information to the network side device when the second predetermined trigger condition is met

202. Receive the target information reported by the user equipment UE

FIG. 8

300

Channel measurement apparatus

Obtaining module                301

Measurement module             302

FIG. 9

400

Channel measurement
apparatus

401

Sending module

FIG. 10

500

LBT failure reporting
apparatus

501

Reporting
module

FIG. 11

600

LBT failure reporting
apparatus

601

Receiving
module

FIG. 12

700

Communication device

701

Processor

702

Memory

FIG. 13

800

| | |
|---|---|
| 801 — Radio frequency unit | Network module — 802 |

810

Memory
Application
Operating system
809

808 — Interface unit

807 — User input unit
8071 — Touch panel
8072 — Another input device

Processor

Audio output unit — 803

804
Input unit
Graphics processing unit — 8041
Microphone — 8042

806
Display unit — 8061
Display panel

Sensor — 805

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22752166
- WO 2017196086 A1
- US 20180124749 A1